# EUROPÄISCHE PATENTSCHRIFT

(11) **EP 3 668 675 B1**
(45) Veröffentlichungstag und Bekanntmachung des Hinweises auf die Patenterteilung: **19.10.2022**
(21) Anmeldenummer: 18749782.1
(22) Anmeldetag: 01.08.2018
(51) Int. Cl.: B23K 11/00, B23K 11/16, B22D 19/06, B23D 65/00, B23D 63/06, B23K 11/02, B23K 11/20, B23K 31/02, B23K 37/04, B23D 63/00, B23K 101/16, B23K 101/20, B23K 103/04, B23K 103/18, B23K 103/00

(54) **VORRICHTUNG UND VERFAHREN ZUM ANSCHWEISSEN VON HARTSTOFFKÖRPERN AN ZÄHNEN EINES SÄGEBLATTS**
DEVICE AND METHOD FOR WELDING HARD MATERIAL ELEMENTS ONTO TEETH OF A SAW BLADE
DISPOSITIF ET PROCÉDÉ POUR SOUDER DES CORPS EN MATÉRIAU DUR SUR DES DENTS D'UNE LAME DE SCIE

(30) Priorität: 16.08.2017 DE 102017118707
(43) Veröffentlichungstag der Anmeldung: 24.06.2020
(73) Patentinhaber: Credé Vermoegensverwaltungs-GmbH + Co. KG, 75181 Pforzheim (DE)
(72) Erfinder: CREDÉ, Marcel, 75173 Pforzheim (DE)
(74) Vertreter: DREISS Patentanwälte PartG mbB
(86) Internationale Anmeldenummer: PCT/EP2018/070867
(87) Internationale Veröffentlichungsnummer: WO 2019/034428

(56) Entgegenhaltungen:
- WO-A1-92/19408
- US-A- 3 063 310
- US-A- 3 340 378
- US-A- 3 674 083

## Beschreibung

Die Erfindung betrifft eine Vorrichtung zum Anschweißen von Hartstoffkörpern an Zähnen eines Sägeblatts, insbesondere eines Band- oder eines Kreissägeblatts, mit einer Sägeblattvorschubeinrichtung zum Bewegen des Sägeblatts in einer Vorschubrichtung, so dass ein jeweiliger intendierter Zahn des Sägeblatts in eine Zielposition in einem Arbeitsbereich der Vorrichtung gebracht werden kann, mit einer ersten Zentriereinrichtung zum Zentrieren des Sägeblatts quer zur Vorschubrichtung und zum Fixieren des Sägeblatts während des Anschweißens des Hartstoffkörpers, mit einer Zuführeinrichtung zum Zuführen eines jeweiligen Hartstoffkörpers, mit einer zweiten Zentriereinrichtung zum Zentrieren eines jeweiligen Hartstoffkörpers quer zur Vorschubrichtung vor dem Anschweißen, mit einer Widerstandsschweißeinrichtung mit einer in den Arbeitsbereich zustellbaren und wieder aus dem Arbeitsbereich rückstellbaren Schweißelektrode, wobei die Zuführeinrichtung zum Zuführen und Übergeben eines jeweiligen Hartstoffkörpers an die Schweißelektrode ausgebildet ist, und wobei die Schweißelektrode mit dem an sie übergebenen Hartstoffkörper in den Arbeitsbereich derart zustellbar ist, dass der Hartstoffkörper auf Anschlag an den in der Zielposition befindlichen Zahn heranführbar ist. Eine derartige Vorrichtung ist beispielsweise bekannt aus WO 2015/140345 A1. Bei dieser Vorrichtung wird die Aufgabe der Positionierung des jeweiligen Hartstoffkörpers an einer jeweiligen Stelle eines Zahns des Sägeblatts dadurch gelöst, dass eine optische Erfassungsvorrichtung eingesetzt wird, mittels derer die Relativlage des Sägeblatts und der Schweißelektrode, welche den Hartstoffkörper trägt, erfasst wird und unter Verwendung dieser Erfassung eine gesteuerte bzw. geregelte Justierung ausgeführt wird, um die Schweißelektrode mit dem daran gehaltenen Hartstoffkörper an die intendierte Stelle des Zahns des Sägeblatts heranzuführen. Bei der vorbekannten Vorrichtung ist die zweite Zentriereinrichtung der Schweißelektrode zugeordnet, d.h. der Hartstoffkörper wird vor seiner Zuführung bezüglich der Schweißelektrode ausgerichtet bzw. zentriert. Eine Fehlausrichtung zwischen Hartstoffkörper bzw. Schweißelektrode und dem Sägezahn muss dann durch die Zustellbewegung der Schweißelektrode korrigiert werden. Die vorbekannte Vorrichtung ist demgemäß komplex, indem sie eine Erfassungseinrichtung und aufwändige Steuer- bzw. Regelprozesse für die verschiedenen Zuführ- oder Zustelleinrichtungen benötigt.

Ferner ist aus der WO 92/19408 A1 eine Vorrichtung zum Bearbeiten von Zähnen an Sägeblättern bekannt. Bei dieser Vorrichtung wird ein Sägeblatt durch eine Vorschubeinrichtung in eine Bearbeitungsvorrichtung mit einer Werkstoffstange gebracht. Zum Aufbringen von Zahnspitzen auf das Sägeblatt wird von der Werkstoffstange mittels eines Brenners Werkstoff abgeschmolzen.

Der vorliegenden Erfindung liegt die Aufgabe zugrunde, eine Vorrichtung der eingangs genannten Art dahingehend weiterzubilden, dass die Zuführ- und Positioniervorgänge einfacher und dabei prozess- und betriebssicher realisiert werden.

Diese Aufgabe wird bei einer Vorrichtung der eingangs genannten Art erfindungsgemäß dadurch gelöst, dass der gegen den Zahn anliegende Hartstoffkörper gegenüber dem zentrierten und fixierten Sägeblatt mittels der zweiten Zentriereinrichtung zentrierbar ist und dass die erste und die zweite Zentriereinrichtung in einer gemeinsamen Baugruppe realisiert sind, so dass die Zentrierung des Sägeblatts durch die erste Zentriereinrichtung eine Zentrierposition für die nachfolgende Zentrierung des Hartstoffkörpers durch die zweite Zentriereinrichtung vorgibt.

Dadurch, dass die erste und die zweite Zentriereinrichtung in einer gemeinsamen Baugruppe realisiert sind und auf diese Weise durch den Zentriervorgang des Sägeblatts mittels der ersten Zentriereinrichtung zugleich die Zentrierposition für den Hartstoffkörper vorgegeben wird, kann der jeweilige Hartstoffkörper nach seiner Heranführung auf Anschlag an den in der Zielposition befindlichen Zahn durch die zweite Zentriereinrichtung zentriert werden; er wird dabei links/rechts einjustiert. Die Zentrierung des Hartstoffkörpers mittels der zweiten Zentriereinrichtung erfolgt also erst nachdem der Hartstoffkörper in Anlage an den in der Zielposition befindlichen Zahn herangeführt ist. Dabei wird der Hartstoffkörper also relativ zu der ihn haltenden Schweißelektrode links/rechts, also quer zur Vorschubrichtung des Sägeblatts, in seine zentrierte Position gegeben, die durch den zuvor erfolgten Zentriervorgang des Sägeblatts mittels der ersten Zentriereinrichtung bereits vorgegeben ist. Hierdurch wird also eine mechanische, zwingend korrekte Zwangspositionierung des Hartstoffkörpers erreicht, weil dessen Zentrierposition durch den zuvor erfolgten Vorgang der Zentrierung des Sägeblatts durch die erste Zentriereinrichtung bereits vorgegeben ist.

Zunächst wird also das Sägeblatt mittels der Sägeblattvorschubeinrichtung transportiert, so dass ein Zahn in die Zielposition gebracht wird. Bei Erreichen dieser Zielposition wird das Sägeblatt durch die erste Zentriereinrichtung zentriert und in dieser Position fixiert.

Im Anschluss an das Zentrieren und Fixieren des Sägeblatts ist dann die Schweißelektrode mit dem an sie übergebenen Hartstoffkörper in den Arbeitsbereich derart zustellbar, dass der Hartstoffkörper, ohne weitergehende Positionierungsmaßnahmen zu erfordern, auf Anschlag an den in der Zielposition befindlichen Zahn heranführbar ist. Erst dann wird mittels der zweiten Zentriereinrichtung die Zentrierung des Hartstoffkörpers bezüglich des zuvor zentrierten Sägeblatts ausgeführt.

Wenn vorstehend von Hartstoffkörpern die Rede ist, so wird hierunter ein Körper an sich beliebiger Geometrie, insbesondere Kugel, Zylinder, Plattenform, aus einem Hartstoff, insbesondere Hartmetall, Cermet, Keramik, Diamant, und zwar als Rohteil oder bearbeitet, insbesondere beschichtet, verstanden.

Die erste Zentriereinrichtung zum Zentrieren und Fixieren des Sägeblatts könnte durch an sich beliebige Stellorgane, welche das Sägeblatt links/rechts zentrieren, gebildet sein. Es erweist sich weiter als vorteilhaft, dass die erste Zentriereinrichtung zum Zentrieren und Fixieren des Sägeblatts eine erste Greiferanordnung mit quer oder schräg zur Vorschubrichtung aufeinander zu bzw. voneinander weg bewegbaren ersten Greiferbacken umfasst. Vorzugsweise handelt es sich hierbei um eine Parallelgreiferanordnung.

In Weiterbildung dieses Gedankens wird vorgeschlagen, dass die erste Greiferanordnung einen Niederzugmechanismus umfasst, so dass das Sägeblatt im Zuge des Zentrierens und Fixierens mit seinem den Zähnen abgewandten Bandrücken in Anlage gegen eine Auflagerfläche gebracht wird. Auf diese Weise kann gleichzeitig beim links/rechts Zentrieren das Sägeband auch orthogonal hierzu, insbesondere in vertikaler Richtung gegen eine Referenzfläche angelegt werden.

Weiter ist vorteilhafterweise vorgesehen, dass die Baugruppe mindestens einen doppeltwirkenden Zylinder umfasst.

Die in der gemeinsamen Baugruppe angeordnete zweite Zentriereinrichtung zum Zentrieren eines jeweiligen Hartstoffkörpers vor dem Anschweißen könnte wiederum durch an sich beliebige Stellorgane gebildet sein, die auf oder an der ersten Zentriereinrichtung angeordnet sind, derart, dass deren Zentrierposition durch die erste Zentriereinrichtung vorgegeben ist. Vorzugsweise ist die zweite Zentriereinrichtung so ausgebildet, dass sie eine zweite Greiferanordnung mit quer oder vorzugsweise schräg zur Vorschubrichtung aufeinander zu bzw. voneinander weg bewegbaren zweiten Greiferbacken umfasst. Dabei ist weiterhin vorgesehen, dass die zweiten Greiferbacken der zweiten Greiferanordnung auf den ersten Greiferbacken der ersten Greiferanordnung geführt sind.

Es ist vorgesehen, dass die ersten und/oder die zweiten Greiferbacken über Keilhaken- oder Keilflächengetriebe aufeinander zu bzw. voneinander weg bewegbar sind.

Ferner ist vorgesehen, dass die Keilhaken- oder Keilflächengetriebe Keilschieber umfassen, die in den ersten Greiferbacken der ersten Zentriereinrichtung geführt sind.

Um das Sägeblatt jeweils inkrementell in der Vorschubrichtung weiter zu bewegen, so das ein jeweiliger intendierte Zahn des Sägeblattes in die Zielposition im Arbeitsbereich der Vorrichtung gebracht wird, könnte die Sägeblattvorschubeinrichtung derart ausgebildet sein, dass sie jeweils eine definierte Stellposition oder gegen einen vorgegebenen Endanschlag anfährt. Demgegenüber wird vorgeschlagen, dass eine mit der Sägeblattvorschubeinrichtung zusammenwirkende Messtastereinrichtung vorgesehen ist, so dass ein jeweiliger intendierter Zahn des Sägeblatts mittels der Sägeblattvorschubeinrichtung und unter Verwendung der Messtastereinrichtung in die Zielposition im Arbeitsbereich bringbar ist.

Dabei kann in vorteilhafter Weise vorgesehen sein, dass die Messtastereinrichtung beim Bewegen des Sägeblatts in Vorschubrichtung in Berührung mit einem Zahn des Sägeblatts gelangt. Die Messtastereinrichtung umfasst hierfür in vorteilhafter Weise einen Taststift, der seinerseits auslenkbar ausgebildet sein kann.

Weiter kann in vorteilhafter Weise vorgesehen sein, dass die Messtastereinrichtung beim Bewegen des Sägeblatts in der Vorschubrichtung in Berührung mit demjenigen Zahn des Sägeblatts gelangt, der gerade in die Zielposition gebracht wird. Dies erweist sich als besonders vorteilhaft, weil hierdurch die Positioniergenauigkeit erhöht werden kann. Es bestehen nämlich fertigungsbedingte Toleranzen der Ausbildung der einzelnen Sägezähne bei einem Sägeblatt.

Dadurch dass die Meßtastereinrichtung mit demjenigen Zahn zusammenwirkt, der gerade in die Zielposition gebracht werden soll, um das Sägeblatt zu positionieren, wird die Auswirkung solcher Toleranzen auf die Positioniergenauigkeit reduziert.

Dabei ist es weiter vorteilhaft, dass die Messtastereinrichtung nahe an demjenigen Bereich des Zahns in Berührung mit dem Zahn gelangt, an dem der Hartstoffkörper angeschweißt werden soll.

Es erweist sich weiter als vorteilhaft, dass die Messtastereinrichtung, insbesondere mit ihren Taststift, quer zur Vorschubrichtung in einen Zahnzwischenraum einund wieder ausstellbar ist. Diese Stellbewegung kann mit Komponenten quer zur Ebene des Sägeblatts und/oder in der Ebene des Sägeblatts erfolgen. Dies kann in vorteilhafter Weise mittels eines elektromagnetischen Linearantriebs erfolgen.

Ferner ist vorgesehen, dass die Messtastereinrichtung, insbesondere deren Taststift, bei der Ausführung des Messbetriebs in der Vorschubrichtung auslenkbar ist.

Des Weiteren kann eine Einrichtung zur Überwachung und Erfassung des Schweißvorgangs vorgesehen sein.

Solchenfalls erweist sich als vorteilhaft, dass bei zurückgestellten zweiten Greiferbacken der zweiten Greiferanordnung eine unverdeckte direkte optische und/oder thermische Erfassung durch die Einrichtung zur Überwachung und Erfassung des Schweißvorgangs ermöglicht ist.

Ferner erweist es sich als vorteilhaft, dass die Schweißelektrode zum magnetischen Halten des an sie übergebenen Hartstoffkörpers ausgebildet ist.

Die Schweißelektrode kann dabei einen Dauermagneten oder einen Elektromagneten umfassen. Vorteilhafterweise wird die magnetische Feldstärke so gewählt, dass der Hartstoffkörper an der Schweißelektrode sicher gehalten wird, jedoch durch die zweite Zentriereinrichtung gleichwohl zentriert, also gegenüber der Schweißelektrode geringfügig verschoben werden kann. Nach dem Anschweißen des Hartstoffkörpers muss die Schweißelektrode problemlos gelöst werden können.

Ferner ist Gegenstand der Erfindung ein Verfahren zum Anschweißen von Hartstoffkörpern an Zähnen eines Sägeblatts unter Verwendung der vorausgehend beschriebenen Vorrichtung, wobei das Verfahren die folgenden Schritte umfasst:
- Zuführen des Sägeblatts in einer Vorschubrichtung mittels der Sägeblattvorschubeinrichtung;
- Bringen eines jeweiligen intendierten Zahns des Sägeblatts in eine Zielposition in einem Arbeitsbereich der Vorrichtung;
- Zentrieren des Sägeblatts mittels der ersten Zentriereinrichtung quer zur Vorschubrichtung;
- Fixieren des Sägeblatts mit der ersten Zentriereinrichtung;
- Zuführen und Übergeben eines jeweiligen Hartstoffkörpers mittels der Zuführeinrichtung an eine Schweißelektrode,
- Zustellen der Schweißelektrode zusammen mit dem an sie übergebenen Hartstoffkörper in den Arbeitsbereich;
- Zentrieren des jeweiligen in den Arbeitsbereich gebrachten Hartstoffkörpers mittels der zweiten Zentriereinrichtung quer zur Vorschubrichtung vor dem Anschweißen,
- Anschweißen des Hartstoffkörpers an den sich in der Zielposition im Arbeitsbereich befindlichen Zahn;
- Rückstellen der Schweißelektrode aus dem Arbeitsbereich;
wobei durch die Zentrierung des Sägeblatts durch die erste Zentriereinrichtung eine Zentrierposition für die Zentrierung des Hartstoffkörpers durch die zweite Zentriereinrichtung vorgegeben wird, so dass beim Zentrieren des jeweiligen Hartstoffkörpers quer zur Vorschubrichtung eine Zentrierung des Hartstoffkörpers gegenüber dem zuvor zentrierten und fixierten Sägeblatt erzielt wird.

Weitere bevorzugten Ausführungsformen der Erfindung ergeben sich aus den Unteransprüchen und aus der nachfolgenden Beschreibung, in der unter Bezugnahme auf die Zeichnung ein bevorzugtes Ausführungsbeispiel im Einzelnen beschrieben ist.

In der Zeichnung zeigen:
- Fig. 1a: eine perspektivische Ansicht der erfindungsgemäßen Vorrichtung mit Sägeblatt;
- Fig. 1b: eine schematische Ansicht der erfindungsgemäßen Vorrichtung gemäß Fig. 1a mit Sägeblatt;
- Fig. 2: einen Ausschnitt der erfindungsgemäßen Vorrichtung gemäß Fig. 1a ohne Sägeblatt;
- Fig. 3a bis 3d: verschiedene Ansichten einer Baugruppe der erfindungsgemäßen Vorrichtung gemäß Fig. 1a, und
- Fig. 4: einen weiteren Ausschnitt der erfindungsgemäßen Vorrichtung gemäß Fig. 1a mit Sägeblatt.

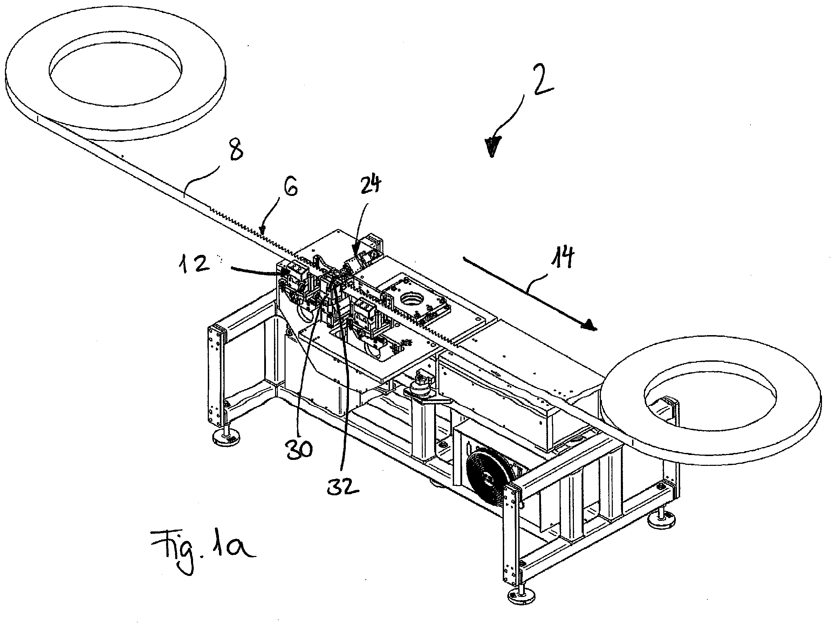

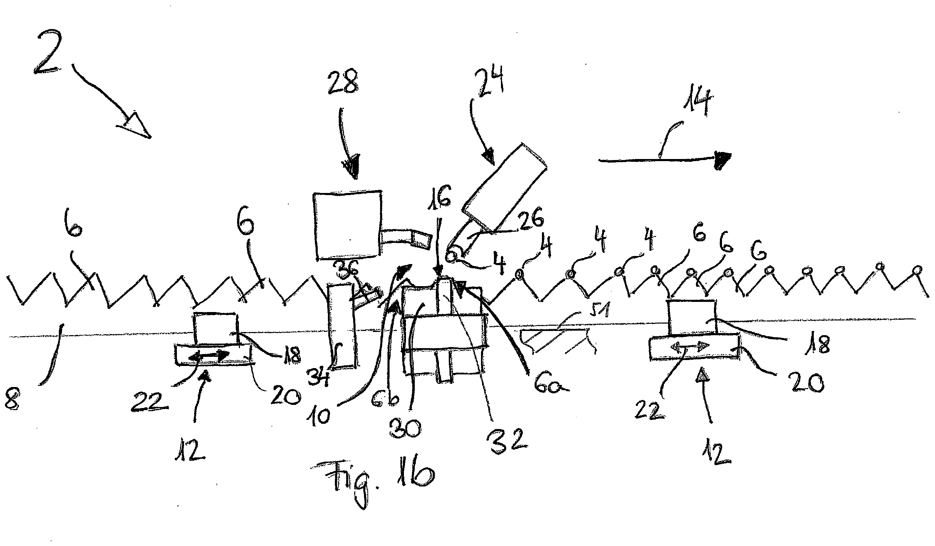

Die Figuren 1a und 1b zeigen die insgesamt mit dem Bezugszeichen 2 bezeichnete erfindungsgemäße Vorrichtung zum Anschweißen von Hartstoffkörpern 4 an Zähnen 6 eines Sägeblatts 8 in einer perspektivischen Ansicht und in einer schematischen Darstellung. In der dargestellten Ausführungsform handelt es sich bei dem Sägeblatt 8 um ein Bandsägeblatt. Die Erfindung ist aber auch anwendbar auf Kreissägeblätter.

Das Anschweißen der Hartstoffkörper 4 an den Zähnen 6 des Sägeblatts 8 erfolgt in einem Arbeitsbereich 10 der Vorrichtung 2. Dazu wird das Sägeblatt 8 mit einer Sägeblattvorschubeinrichtung 12 in Vorschubrichtung 14 bewegt, sodass ein jeweiliger intendierter Zahn 6a des Sägeblatts 8 in eine Zielposition 16 im Arbeitsbereich 10 der Vorrichtung 2 gebracht werden kann. Die Sägeblattvorschubeinrichtung 12 umfasst gemäß der dargestellten Ausführungsform Greif- oder Klemmeinrichtung 18 zum Erfassen des Sägeblatts 8, die auf Vorschubschlitten 20 montiert sind. Die Vorschubschlitten 20 sind beispielsweise mittels eines Antriebs in Richtung des Doppelpfeils 22 parallel zur Vorschubrichtung 14 verfahrbar. Bei dem Antrieb handelt es sich vorzugsweise um einen elektrischen Linearantrieb.

Zum Anschweißen der Hartstoffkörper 4 an den Zähnen 6 des Sägeblatts 8 umfasst die Vorrichtung 2 eine Widerstandsschweißeinrichtung 24 mit einer in den Arbeitsbereich 10 zustellbaren und wieder aus dem Arbeitsbereich 10 rückstellbaren Schweißelektrode 26. Mit einer Zuführeinrichtung 28 wird ein jeweiliger Hartstoffkörper 4 an die Schweißelektrode 26 zugeführt und an diese übergeben. Die Schweißelektrode 26 wird mit dem an sie übergebenen Hartstoffkörper 4 in den Arbeitsbereich 10 der Vorrichtung 2 zugestellt, und der Hartstoffkörper 4 wird dabei an den in der Zielposition 16 befindlichen Zahn 6a des Sägeblatts 4 herangeführt, und zwar bis auf Anschlag an den Zahn 6a.

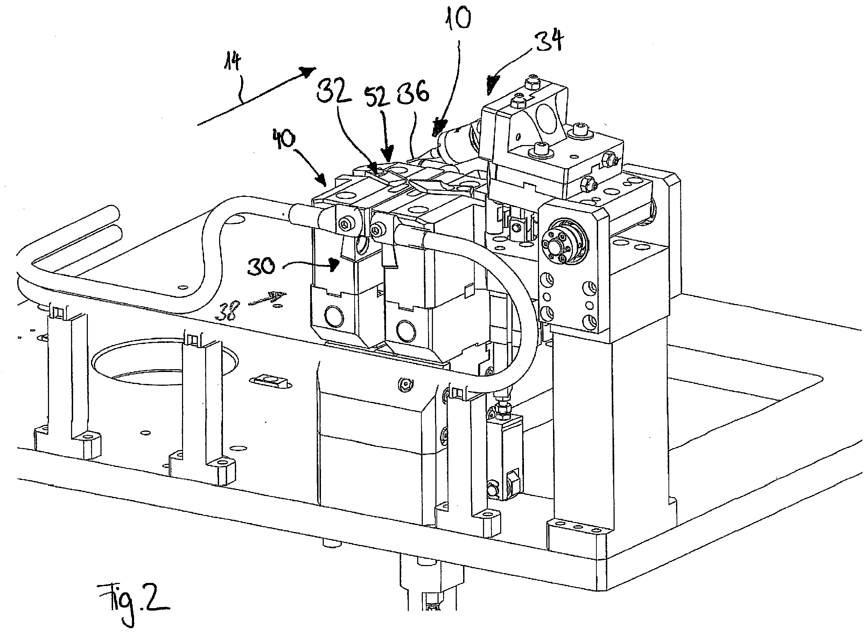

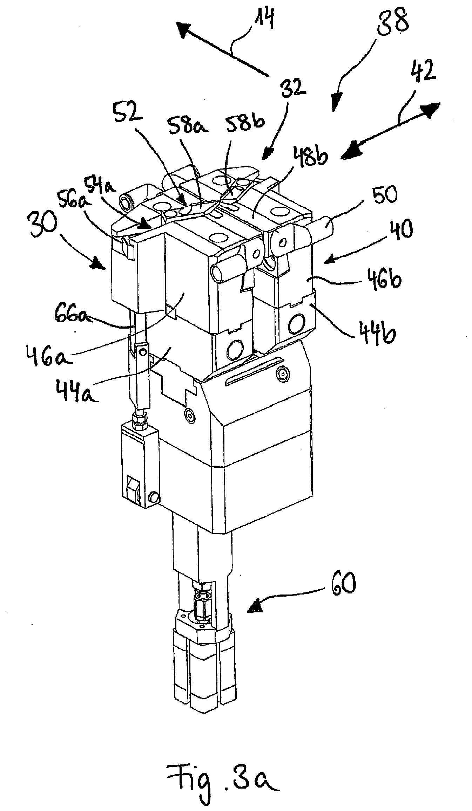

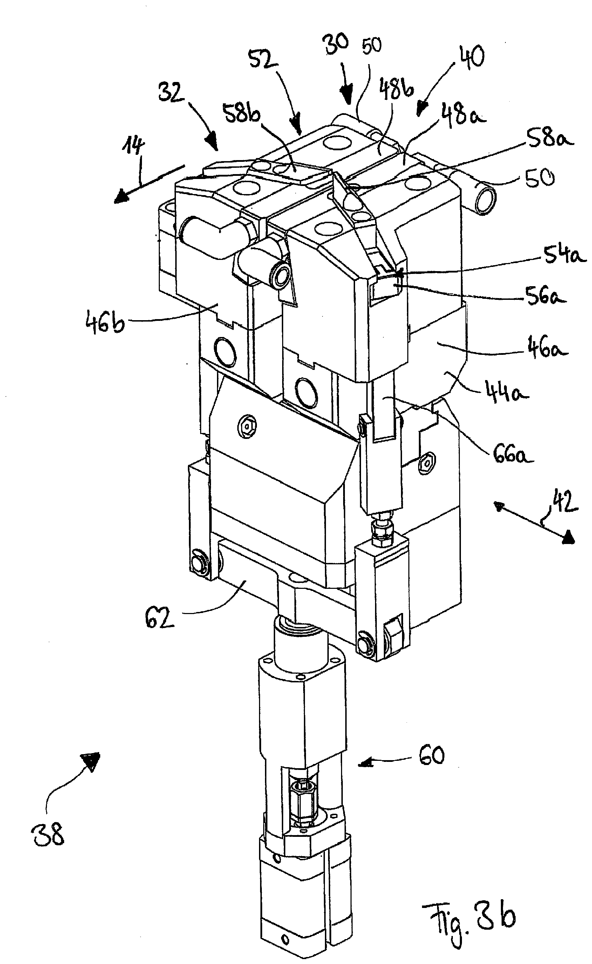

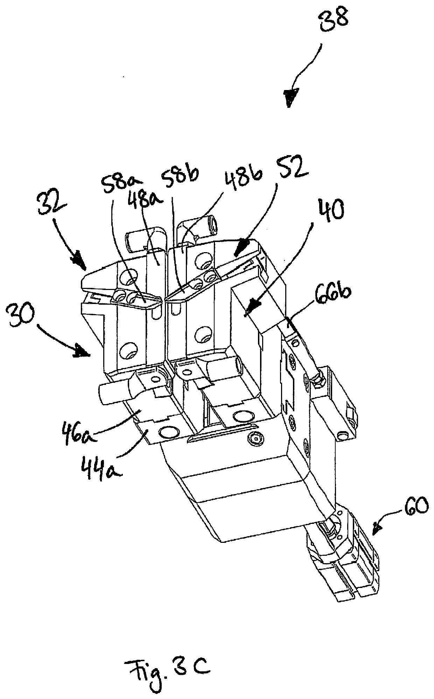

Mittels einer ersten Zentriereinrichtung 30 wird das Sägeblatt 8 vor dem Schweißvorgang quer zu Vorschubrichtung 14 zentriert und in der zentrierten Position fixiert. Eine zweite Zentriereinrichtung 32 dient zum Zentrieren des jeweiligen Hartstoffkörpers 4 quer zur Vorschubrichtung 14 vor dem Anschweißen an den jeweiligen intendierten sich in der Zielposition befindlichen Zahn 6a des Sägeblatts 8. Die Funktionsweise und der Aufbau der ersten und der zweiten Zentriereinrichtung 30, 32 werden nachfolgend anhand der Figuren 2 und 3a bis 3d erläutert. Nachdem der Schweißvorgang beendet ist, wird das Sägeblatt 8 mittels der Sägeblattvorschubeinrichtung 12 weiter in Vorschubrichtung 14 bewegt, sodass ein nachfolgender Zahn 6b in die Zielposition 16 gebracht werden kann.

Figur 2 zeigt einen Ausschnitt oder eine Teilansicht der erfindungsgemäßen Vorrichtung 2 gemäß Figur 1, wobei zum besseren Verständnis nicht unmittelbar interessierende weitere Bestandteile weggelassen sind. Der dargestellte Ausschnitt zeigt den Arbeitsbereich 10, die erste Zentriereinrichtung 30, die zweite Zentriereinrichtung 32 sowie eine Messtastereinrichtung 34. Mittels der Messtastereinrichtung 34 wird ein jeweiliger intendierter Zahn 6a des Sägeblatts 8 in die Zielposition 16 gebracht bzw. wird sichergestellt, dass sich ein jeweiliger intendierte Zahn 6a des Sägeblatts in der Zielposition befindet. Dazu kann die Messtastereinrichtung 34 in einen Zahnzwischenraum des sich im Arbeitsbereich 10 befindlichen Sägeblatts 8 ein- und wieder ausgestellt werden. Beim Bewegen des Sägeblatts 8 durch die Sägeblattvorschubeinrichtung 12 in Vorschubrichtung 14 gelangt die in den Arbeitsbereich eingestellte Messtastereinrichtung 34 in Kontakt mit einem Zahn 6 des Sägeblatts 8 und ein Taststift 36 der Messtastereinrichtung 34 wird in Vorschubrichtung 14 ausgelenkt. Die Messtastereinrichtung 34 umfasst ferner einen nicht weiter dargestellten Sensor, der die Auslenkung des Taststifts 36 detektiert. Anhand der Auslenkung des Taststifts 36 der Messtastereinrichtung 34 ist bestimmbar, ob sich der jeweilige intendierte Zahn 6a des Sägeblatts 8 in der Zielposition 16 befindet. Beim Erreichen der Zielposition 16 wird der Vorschub des Sägeblatts 8 durch die Sägeblattvorschubeinrichtung 12 unterbrochen, und das Sägeblatt 8 wird quer zur Vorschubrichtung 14 durch die erste Zentriereinrichtung 30 zentriert und fixiert, und zwar vorzugsweise bis zur Beendigung des anstehenden Schweißvorgangs.

Die Figuren 2 und 3a bis 3c zeigen eine insgesamt mit dem Bezugszeichen 38 bezeichnete Baugruppe. Die Baugruppe 38 umfasst die erste Zentriereinrichtung 30 zum Zentrieren des Sägeblatts 8 und die zweite Zentriereinrichtung 32 zum Zentrieren eines jeweiligen Hartstoffkörpers 4.

Die erste Zentriereinrichtung 30 umfasst eine erste Greiferanordnung 40 mit quer zur Vorschubrichtung 14 in Richtung des Doppelpfeils 42 aufeinander zu bzw. von einander weg bewegbaren ersten Greiferbacken 44a, 44b zum Greifen des Sägeblatts 8. Die Greifbewegung der ersten Greiferbacken 44a, 44b wird beispielsweise aus einer Stellbewegung eines insbesondere doppeltwirkenden Zylinders über ein Keilhakengetriebe in eine Bewegung in Richtung des Doppelpfeils 42 umgesetzt.

Gemäß der hier dargestellten Ausführungsform umfassen die Greiferbacken 44a, 44b Grundbacken 46a, 46b und elektrisch leitfähige Greifbackeneinsätze 48a, 48b. Die Greifbackeneinsätze 48a, 48b kontaktieren während des Schweißvorgangs das Sägeblatt 8. Zum Ableiten des Schweißstroms sind die Greifbackeneinsätze 48a, 48b über elektrische Anschlüsse 50 mit elektrischen Leitungen verbunden, über die der Schweißstrom geleitet wird.

Ferner umfasst die erste Zentriereinrichtung 30 einen Niederzugsmechanismus. Über den Niederzugsmechanismus wird das Sägeblatt 8 im Zuge des Greifens und Fixierens mittels der ersten Greiferbacken 44a, 44b in Anlage gegen eine nur in Figur 1b schematisch dargestellte, sich zwischen den ersten Greiferbacken 44a, 44b befindende Auflagerfläche 51 gebracht.

Die zweite Zentriereinrichtung 32 umfasst eine zweite Greiferanordnung 52 mit zweiten Greiferbacken 54a, 54b, wobei die zweiten Greiferbacken in den Greiferbacken 44a, 44b geführt sind. Gemäß der hier dargestellten Ausführungsform sind die Greiferbacken 54a, 54b schräg zur Vorschubrichtung 14 aufeinander zu bzw. voneinander weg bewegbar. Die zweiten Greiferbacken 54a, 54b umfassen gemäß der hier dargestellten Ausführungsform zweite Grundbacken 56a, 56b und Greiferfinger 58a, 58b zum Erfassen und Zentrieren der Hartstoffkörper 4.

Gemäß der hier dargestellten Ausführungsform umfasst die zweite Zentriereinrichtung 32 einen doppeltwirkenden Zylinder 60. Über eine Zylinderbrücke 62 wird eine durch den doppeltwirkenden Zylinder 60 bewirkte Stellbewegung auf Keilhakengetriebe 64a, 64b übertragen. Die Keilhakengetriebe 64a, 64b setzen die Stellbewegung des doppeltwirkenden Zylinders 60 in die Greifbewegung der zweiten Greiferbacken 54a, 54b, vorliegend beispielhaft schräg zur Vorschubrichtung 14, jedoch insbesondere und vorzugsweise orthogonal zur Stellbewegung des doppeltwirkenden Zylinders 60 um. Es wäre auch denkbar, dass die Stellbewegung durch andere Antriebsmittel als einen doppelt wirkenden Zylinder erzeugt wird.

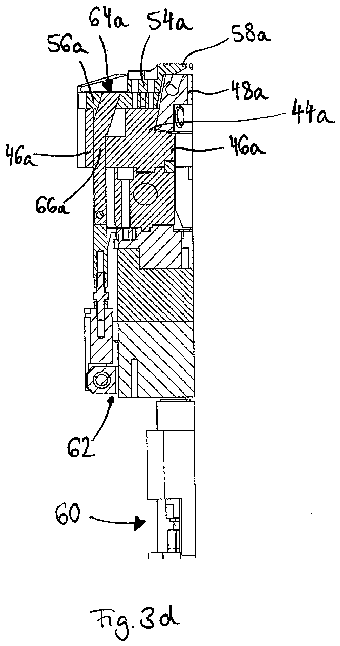

Aus den Figuren 3a bis 3c ist ersichtlich, dass die zweiten Greiferbacken 54a, 54b der zweiten Greiferanordnung 52 auf den ersten Greiferbacken 44a, 44b der ersten Greiferanordnung 40 geführt sind. Figur 3d zeigt eine halbierte Schnittansicht der Baugruppe 38. Ein Keilschieber 66a des Keilhakengetriebes 64a der zweiten Greiferanordnung 52 ist in den ersten Greiferbacken 44a der ersten Greiferanordnung 40 geführt. Auf diese Weise wird eine Zentrierung der zweiten Zentriervorrichtung 32 quer zur Vorschubrichtung relativ zur ersten Zentriereinrichtung 30 erreicht. Damit wird durch die Zentrierung des Sägeblatts 8 durch die erste Zentriereinrichtung 30 zugleich eine Zentrierposition für die Zentrierung des Hartstoffkörpers 4 durch die zweite Zentriereinrichtung 32 vorgegeben.

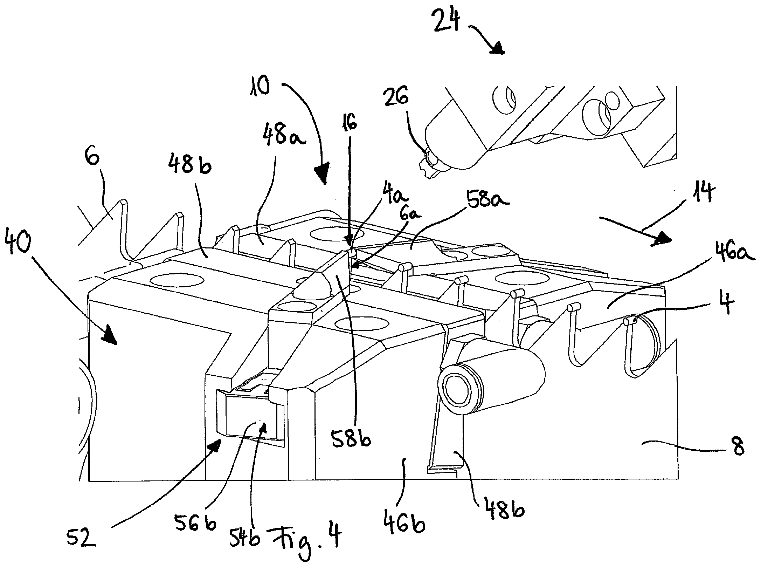

Figur 4 zeigt einen Ausschnitt der erfindungsgemäßen Vorrichtung 2 gemäß Figur 1 mit Sägeblatt 8 und Hartstoffkörper in der Zielposition. Der dargestellte Ausschnitt zeigt den Arbeitsbereich 10 der Vorrichtung 2. Der Zahn 6a des Sägeblatts 8 befindet sich in der Zielposition 16. Das Sägeblatt 8 ist zwischen den Greiferbackeneinsätzen 48a, 48b der ersten Greiferanordnung 40 der ersten Zentriereinrichtung 30 aufgenommen und quer zur Vorschubrichtung 14 zentriert und fixiert. Der Hartstoffkörper 4a ist zwischen den Greiferfingern 58a, 58b der zweiten Greiferanordnung 52 der zweiten Zentriereinrichtung 32 angeordnet. Die Schweißelektrode 26 der Widerstandsschweißeinrichtung ist zur besseren Darstellung des Hartstoffkörpers aus dem Arbeitsbereich zurückgestellt dargestellt. Im bestimmungsgemäßen Betrieb kontaktiert die Schweißelektrode 26 den Hartstoffkörper und hält diesen gegen den betreffenden Zahn, während die Greiferfinger 58a, 58b den Hartstoffkörper beidseits begrenzen und dabei bezüglich der Sägeblattebene zentrieren. Nach der Ausführung dieser Zentrierung fahren die Greiferfinger 58a, 58b zurück, und der Schweißvorgang wird dann ausgeführt.

## Patentansprüche

1. Vorrichtung (2) zum Anschweißen von Hartstoffkörpern (4) an Zähnen (6) eines Sägeblatts (8), insbesondere eines Band- oder eines Kreissägeblatts,
mit einer Sägeblattvorschubeinrichtung (12) zum Bewegen des Sägeblatts (8) in einer Vorschubrichtung (14), so dass ein jeweiliger intendierter Zahn (6a) des Sägeblatts (8) in eine Zielposition (16) in einem Arbeitsbereich (10) der Vorrichtung (2) gebracht werden kann,
mit einer ersten Zentriereinrichtung (30) zum Zentrieren des Sägeblatts (8) quer zur Vorschubrichtung (14) und zum Fixieren des Sägeblatts (8) während des Anschweißens des Hartstoffkörpers (4), mit einer Zuführeinrichtung (28) zum Zuführen eines jeweiligen Hartstoffkörpers (4),
mit einer zweiten Zentriereinrichtung (32) zum Zentrieren eines jeweiligen Hartstoffkörpers (4) quer zur Vorschubrichtung (14) vor dem Anschweißen,
mit einer Widerstandsschweißeinrichtung (24) mit einer in den Arbeitsbereich (10) zustellbaren und wieder aus dem Arbeitsbereich (10) rückstellbaren Schweißelektrode (26),
wobei die Zuführeinrichtung (28) zum Zuführen und Übergeben eines jeweiligen Hartstoffkörpers (4) an die Schweißelektrode (26) ausgebildet ist, und wobei die Schweißelektrode (26) mit dem an sie übergebenen Hartstoffkörper (4) in den Arbeitsbereich (10) derart zustellbar ist, dass der Hartstoffkörper (4) auf Anschlag an den in der Zielposition (16) befindlichen Zahn (6a) heranführbar ist, **dadurch gekennzeichnet,**
**dass** der gegen den Zahn (6a) anliegende Hartstoffkörper (4) gegenüber dem zentrierten und fixierten Sägeblatt (8) mittels der zweiten Zentriereinrichtung (32) zentrierbar ist und dass die erste und die zweite Zentriereinrichtung (30, 32) in einer gemeinsamen Baugruppe (38) realisiert sind, so dass die Zentrierung des Sägeblatts (8) durch die erste Zentriereinrichtung (30) eine Zentrierposition für die nachfolgende Zentrierung des Hartstoffkörpers (4) durch die zweite Zentriereinrichtung (32) vorgibt.

2. Vorrichtung (2) nach Anspruch 1, **dadurch gekennzeichnet, dass** die erste Zentriereinrichtung (30) zum Zentrieren und Fixieren des Sägeblatts (8) eine erste Greiferanordnung (40) mit quer oder schräg zur Vorschubrichtung aufeinander zu bzw. voneinander weg bewegbaren ersten Greiferbacken (44a, 44b) umfasst.

3. Vorrichtung (2) nach Anspruch 2, **dadurch gekennzeichnet, dass** die erste Greiferanordnung (40) einen Niederzugmechanismus umfasst, so dass das Sägeblatt (8) im Zuge des Zentrierens und Fixierens mit seinem den Zähnen (6) abgewandten Bandrücken in Anlage gegen eine Auflagerfläche gebracht wird.

4. Vorrichtung (2) nach einem oder mehreren der vorhergehenden Ansprüche, **dadurch gekennzeichnet, dass** die Baugruppe (38) mindestens einen doppeltwirkenden Zylinder (60) umfasst.

5. Vorrichtung (2) nach einem oder mehreren der vorhergehenden Ansprüche, **dadurch gekennzeichnet, dass** die zweite Zentriereinrichtung (32) zum Zentrieren eines jeweiligen Hartstoffkörpers (4) vor dem Anschweißen eine zweite Greiferanordnung (52) mit quer oder vorzugsweise schräg zur Vorschubrichtung (14) aufeinander zu bzw. voneinander weg bewegbaren zweiten Greiferbacken (54a, 54b) umfasst.

6. Vorrichtung (2) nach Anspruch 5, **dadurch gekennzeichnet, dass** die zweiten Greiferbacken (54a, 54b) der zweiten Greiferanordnung (52) auf den ersten Greiferbacken (44a, 44b) der ersten Greiferanordnung (40) geführt sind.

7. Vorrichtung (2) nach einem der Ansprüche 5 oder 6, **dadurch gekennzeichnet, dass** die ersten und/oder die zweiten Greiferbacken (44a, 44b, 54a, 54b) über Keilhaken- oder Keilflächengetriebe (64a, 64b) aufeinander zu bzw. voneinander weg bewegbar sind.

8. Vorrichtung (2) nach Anspruch 7, **dadurch gekennzeichnet, dass** die Keilhaken- oder Keilflächengetriebe (64a, 64b) Keilschieber (66a, 66b) umfassen, die in den ersten Greiferbacken (44a, 44b) der ersten Zentriereinrichtung (30) geführt sind.

9. Vorrichtung (2) nach einem oder mehreren der vorhergehenden Ansprüche, **dadurch gekennzeichnet, dass** eine mit der Sägeblattvorschubeinrichtung (12) zusammenwirkende Messtastereinrichtung (34) vorgesehen ist, so dass ein jeweiliger intendierter Zahn (6) des Sägeblatts (8) mittels der Sägeblattvorschubeinrichtung (12) und unter Verwendung der Messtastereinrichtung (34) in die Zielposition (16) im Arbeitsbereich (10) bringbar ist.

10. Vorrichtung (2) nach Anspruch 9, **dadurch gekennzeichnet, dass** die Messtastereinrichtung (34) beim Bewegen des Sägeblatts (8) in Vorschubrichtung (14) in Berührung mit einem Zahn (6) des Sägeblatts (8) gelangt.

11. Vorrichtung (2) nach Anspruch 10, **dadurch gekennzeichnet, dass** die Messtastereinrichtung (34) beim Bewegen des Sägeblatts (8) in Vorschubrichtung (14) in Berührung mit demjenigen Zahn (6) des Sägeblatts (8) gelangt, der gerade in die Zielposition (16) gebracht wird.

12. Vorrichtung (2) nach Anspruch 11, **dadurch gekennzeichnet, dass** die Messtastereinrichtung (34) nahe an demjenigen Bereich des Zahns (6) in Berührung mit dem Zahn (6) gelangt, an dem der Hartstoffkörper (4) angeschweißt werden soll.

13. Vorrichtung (2) nach einem der Ansprüche 9 bis 12, **dadurch gekennzeichnet, dass** die Messtastereinrichtung (34) quer zur Vorschubrichtung (14) in einen Zahnzwischenraum ein- und wieder ausstellbar ist.

14. Vorrichtung (2) nach einem der Ansprüche 9 bis 13, **dadurch gekennzeichnet, dass** die Messtastereinrichtung (34) bei der Ausführung des Messbetriebs in der Vorschubrichtung (14) auslenkbar ist.

15. Vorrichtung (2) nach einem oder mehreren der vorhergehenden Ansprüche, **dadurch gekennzeichnet, dass** eine Einrichtung zur Überwachung und Erfassung des Schweißvorgangs vorgesehen ist.

16. Vorrichtung (2) nach Anspruch 15, **dadurch gekennzeichnet, dass** bei zurückgestellten zweiten Greiferbacken (54a, 54b) der zweiten Greiferanordnung (52) eine unverdeckte direkte optische und/oder thermische Erfassung durch die Einrichtung zur Überwachung und Erfassung des Schweißvorgangs ermöglicht ist.

17. Vorrichtung (2) nach einem oder mehreren der vorhergehenden Ansprüche, **dadurch gekennzeichnet, dass** die Schweißelektrode (26) zum magnetischen Halten des an sie übergebenen Hartstoffkörpers ausgebildet ist.

18. Verfahren zum Anschweißen von Hartstoffkörpern (4) an Zähnen (6) eines Sägeblatts (8) unter Verwendung einer Vorrichtung (2) nach einem oder mehreren der Ansprüche 1 bis 16, **dadurch gekennzeichnet, dass** das Verfahren die folgenden Schritte umfasst:
- Zuführen des Sägeblatts (8) in einer Vorschubrichtung (14) mittels der Sägeblattvorschubeinrichtung (12);
- Bringen eines jeweiligen intendierten Zahns (6a) des Sägeblatts (8) in eine Zielposition (16) in einem Arbeitsbereich (10) der Vorrichtung (2);
- Zentrieren des Sägeblatts (8) mittels der ersten Zentriereinrichtung (30) quer zur Vorschubrichtung (14) ;
- Fixieren des Sägeblatts mit der ersten Zentriereinrichtung (30);
- Zuführen und Übergeben eines jeweiligen Hartstoffkörpers (4) mittels der Zuführeinrichtung (28) an eine Schweißelektrode (26),
- Zustellen der Schweißelektrode (26) zusammen mit dem an sie übergebenen Hartstoffkörper in den Arbeitsbereich (10);
- Zentrieren des jeweiligen in den Arbeitsbereich gebrachten Hartstoffkörpers (4) mittels der zweiten Zentriereinrichtung (32) quer zur Vorschubrichtung vor dem Anschweißen,
- Anschweißen des Hartstoffkörpers (4) an den sich in der Zielposition (16) im Arbeitsbereich befindlichen Zahn (6a);
- Rückstellen der Schweißelektrode (26) aus dem Arbeitsbereich (10);
**dadurch gekennzeichnet,**
**dass** durch die Zentrierung des Sägeblatts (8) durch die erste Zentriereinrichtung (30) eine Zentrierposition für die Zentrierung des Hartstoffkörpers (4) durch die zweite Zentriereinrichtung (32) vorgegeben wird, so dass beim Zentrieren des jeweiligen Hartstoffkörpers (4) quer zur Vorschubrichtung (14) eine Zentrierung des Hartstoffkörpers (4) gegenüber dem zuvor zentrierten und fixierten Sägeblatt (8) erzielt wird.

## Claims

1. Device (2) for welding hard material elements (4) onto teeth (6) of a saw blade (8), in particular a band or circular saw blade,
comprising a saw blade feed device (12) for moving the saw blade (8) in a feed direction (14), such that a respective intended tooth (6a) of the saw blade (8) can be brought into a target position (16) in a working region (10) of the device (2),
comprising a first centering device (30) for centering the saw blade (8) transversely to the feed direction (14) and for fixing the saw blade (8) while the hard material element (4) is welded on,
comprising a supply device (28) for supplying a respective hard material element (4),
comprising a second centering device (32) for centering a respective hard material element (4) transversely to the feed direction (14) before the welding,
comprising a resistance welding device (24) having a welding electrode (26) that can be deployed into the working region (10) and can be withdrawn from the working region (10),
the supply device (28) being designed to supply and transfer a respective hard material element (4) to the welding electrode (26), and it being possible for the welding electrode (26) with the hard material element (4) transferred thereto to be deployed into the working region (10) in such a way that the hard material element (4) can be brought toward the tooth (6a) in the target position (16) to abut the tooth (6a),
**characterized in that** the hard material element (4) abutting the tooth (6a) can be centered relative to the centered and fixed saw blade (8) by means of the second centering device (32), and **in that** the first and the second centering device (30, 32) are provided in a common assembly (38), such that the centering of the saw blade (8) by the first centering device (30) predetermines a centering position for the subsequent centering of the hard material element (4) by the second centering device (32).

2. Device (2) according to claim 1, **characterized in that** the first centering device (30) for centering and fixing the saw blade (8) comprises a first gripper arrangement (40) having first gripper jaws (44a, 44b) that can be moved toward or away from one another transversely or obliquely to the feed direction.

3. Device (2) according to claim 2, **characterized in that** the first gripper arrangement (40) comprises a pulldown mechanism, so that the saw blade (8), with its band back facing away from the teeth (6), is brought into abutment with a support surface during the centering and fixing.

4. Device (2) according to one or more of the preceding claims, **characterized in that** the assembly (38) comprises at least one double-acting cylinder (60).

5. Device (2) according to one or more of the preceding claims, **characterized in that** the second centering device (32) for centering a respective hard material element (4) before the welding comprises a second gripper arrangement (52) having second gripper jaws (54a, 54b) that can be moved toward or away from one another transversely or preferably obliquely to the feed direction (14).

6. Device (2) according to claim 5, **characterized in that** the second gripper jaws (54a, 54b) of the second gripper arrangement (52) are guided on the first gripper jaws (44a, 44b) of the first gripper arrangement (40).

7. Device (2) according to one of claims 5 or 6, **characterized in that** the first and/or the second gripper jaws (44a, 44b, 54a, 54b) can be moved toward or away from one another via wedge hook or wedge surface gear mechanisms (64a, 64b).

8. Device (2) according to claim 7, **characterized in that** the wedge hook or wedge surface gear mechanisms (64a, 64b) comprise wedge slides (66a, 66b) which are guided in the first gripper jaws (44a, 44b) of the first centering device (30).

9. Device (2) according to one or more of the preceding claims, **characterized in that** a measuring sensor device (34) which interacts with the saw blade feed device (12) is provided, such that a respective intended tooth (6) of the saw blade (8) can be brought into the target position (16) in the working region (10) by means of the saw blade feed device (12) and using the measuring sensor device (34).

10. Device (2) according to claim 9, **characterized in that** the measuring sensor device (34) comes into contact with a tooth (6) of the saw blade (8) when the saw blade (8) is moved in the feed direction (14).

11. Device (2) according to claim 10, **characterized in that**, when the saw blade (8) is moved in the feed direction (14), the measuring sensor device (34) comes into contact with the tooth (6) of the saw blade (8) that is being moved to the target position (16).

12. Device (2) according to claim 11, **characterized in that** the measuring sensor device (34) comes into contact with the tooth (6) close to the region of the tooth (6) to which the hard material element (4) is to be welded.

13. Device (2) according to any of claims 9 to 12, **characterized in that** the measuring sensor device (34) can be inserted into and withdrawn from a tooth gap transversely to the feed direction (14).

14. Device (2) according to any of claims 9 to 13, **characterized in that** the measuring sensor device (34) can be deflected in the feed direction (14) while the measuring operation is being carried out.

15. Device (2) according to one or more of the preceding claims, **characterized in that** a device for monitoring and detecting the welding action is provided.

16. Device (2) according to claim 15, **characterized in that**, when the second gripper jaws (54a, 54b) of the second gripper arrangement (52) are reset, an uncovered direct optical and/or thermal detection by the device for monitoring and detecting the welding action is made possible.

17. Device (2) according to one or more of the preceding claims, **characterized in that** the welding electrode (26) is designed to magnetically hold the hard material element transferred thereto.

18. Method for welding hard material elements (4) onto teeth (6) of a saw blade (8) using a device (2) according to one or more of claims 1 to 16, **characterized in that** the method comprises the following steps:
- supplying the saw blade (8) in a feed direction (14) by means of the saw blade feed device (12);
- bringing a respective intended tooth (6a) of the saw blade (8) into a target position (16) in a working region (10) of the device (2);
- centering the saw blade (8) by means of the first centering device (30) transversely to the feed direction (14);
- fixing the saw blade by means of the first centering device (30);
- supplying and transferring a respective hard material element (4) to a welding electrode (26) by means of the supply device (28),
- deploying the welding electrode (26) together with the hard material element transferred thereto into the working region (10);
- centering the respective hard material element (4) brought into the working region by means of the second centering device (32) transversely to the feed direction before the welding,
- welding the hard material element (4) onto the tooth (6a) in the target position (16) in the working region;
- withdrawing the welding electrode (26) from the working region (10);
**characterized in that**
a centering position for the centering of the hard material element (4) by the second centering device (32) is predetermined by the centering of the saw blade (8) by the first centering device (30), such that, when centering the respective hard material element (4) transversely to the feed direction (14), the hard material (4) element is centered relative to the previously centered and fixed saw blade (8).

## Revendications

1. Dispositif (2) pour souder des corps en matériau dur (4) sur des dents (6) d'une lame de scie (8), en particulier d'une lame de scie à ruban ou d'une lame de scie circulaire,
avec un dispositif d'avance de lame de scie (12) pour déplacer la lame de scie (8) dans une direction d'avance (14) de sorte qu'une dent (6a) respective visée de la lame de scie (8) peut être amenée dans une position cible (16) à l'intérieur d'une zone de travail (10) du dispositif (2),
avec un premier dispositif de centrage (30) pour centrer la lame de scie (8) transversalement à la direction d'avance (14) et pour fixer la lame de scie (8) lorsque le corps en matériau dur (4) est soudé, avec un dispositif d'amenée (28) destiné à amener un corps en matériau dur (4) respectif,
avec un deuxième dispositif de centrage (32) pour centrer un corps en matériau dur (4) respectif transversalement à la direction d'avance (14) avant le soudage,
avec un dispositif de soudage par résistance (24) comprenant une électrode de soudage (26) qui peut être avancée dans la zone de travail (10) et à nouveau être reculée de la zone de travail (10),
dans lequel le dispositif d'amenée (28) est conçu pour amener un corps en matériau dur (4) respectif et remettre celui-ci à l'électrode de soudage (26), et dans lequel l'électrode de soudage (26) avec le corps en matériau dur (4) qui lui a été remis peut être avancée dans la zone de travail (10) de telle manière que le corps en matériau dur (4) puisse être amené en butée contre la dent (6a) située dans la position cible (16), **caractérisé par le fait que** le corps en matériau dur (4) qui est en appui contre la dent (6a) peut être centré au moyen du deuxième dispositif de centrage (32) par rapport à la lame de scie (8) centrée et fixée et que les premier et deuxième dispositifs de centrage (30, 32) sont réalisés dans un ensemble (38) commun de sorte que le centrage de la lame de scie (8) par le premier dispositif de centrage (30) donne une position de centrage pour le centrage suivant du corps en matériau dur (4) par le deuxième dispositif de centrage (32) .

2. Dispositif (2) selon la revendication 1, **caractérisé par le fait que** le premier dispositif de centrage (30) pour centrer et fixer la lame de scie (8) comprend un premier ensemble de préhension (40) ayant des premières mâchoires de préhension (44a, 44b) qui peuvent être rapprochées ou bien écartées les unes des autres transversalement ou obliquement par rapport à la direction d'avance.

3. Dispositif (2) selon la revendication 2, **caractérisé par le fait que** le premier ensemble de préhension (40) comprend un mécanisme d'abaissement de sorte que, en cours du centrage et de la fixation, la lame de scie (8) peut être mise en appui, par son dos de ruban montrant dans la direction opposée aux dents (6), contre une surface d'appui.

4. Dispositif (2) selon l'une ou plusieurs des revendications précédentes, **caractérisé par le fait que** l'ensemble (38) comprend au moins un vérin à double effet (60).

5. Dispositif (2) selon l'une ou plusieurs des revendications précédentes, **caractérisé par le fait que** le deuxième dispositif de centrage (32) pour centrer un corps en matériau dur (4) respectif avant le soudage présente un deuxième ensemble de préhension (52) ayant des deuxièmes mâchoires de préhension (54a, 54b) qui peuvent être rapprochées ou bien écartées les unes des autres transversalement ou de préférence obliquement par rapport à la direction d'avance (14).

6. Dispositif (2) selon la revendication 5, **caractérisé par le fait que** les deuxièmes mâchoires de préhension (54a, 54b) du deuxième ensemble de préhension (52) sont guidées sur les premières mâchoires de préhension (44a, 44b) du premier ensemble de préhension (40).

7. Dispositif (2) selon l'une quelconque des revendications 5 ou 6, **caractérisé par le fait que** les premières et/ou deuxièmes mâchoires de préhension (44a, 44b, 54a, 54b) peuvent être rapprochées ou bien écartées les unes des autres par l'intermédiaire d'engrenages à crochet en coin ou surface en coin (64a, 64b) .

8. Dispositif (2) selon la revendication 7, **caractérisé par le fait que** les engrenages à crochet en coin ou surface en coin (64a, 64b) comprennent des coulisseaux de coin (66a, 66b) qui sont guidés dans les premières mâchoires de préhension (44a, 44b) du premier dispositif de centrage (30).

9. Dispositif (2) selon l'une ou plusieurs des revendications précédentes, **caractérisé par le fait qu'**un dispositif de palpeur de mesure (34) qui coopère avec le dispositif d'avance de lame de scie (12) est prévu de sorte qu'une dent (6) respective visée de la lame de scie (8) peut être amenée dans la position cible (16) à l'intérieur de la zone de travail (10) au moyen du dispositif d'avance de lame de scie (12) et en utilisant le dispositif de palpeur de mesure (34).

10. Dispositif (2) selon la revendication 9, **caractérisé par le fait que** le dispositif de palpeur de mesure (34) entre en contact avec une dent (6) de la lame de scie (8) lorsque la lame de scie (8) est déplacée dans la direction d'avance (14).

11. Dispositif (2) selon la revendication 10, **caractérisé par le fait que**, lorsque la lame de scie (8) est déplacée dans la direction d'avance (14), le dispositif de palpeur de mesure (34) entre en contact avec la dent (6) de la lame de scie (8), qui est en train d'être amenée dans la position cible (16).

12. Dispositif (2) selon la revendication 11, **caractérisé par le fait que** le dispositif de palpeur de mesure (34) entre en contact avec la dent (6) à proximité de la zone de la dent (6), sur laquelle le corps en matériau dur (4) doit être soudé.

13. Dispositif (2) selon l'une quelconque des revendications 9 à 12, **caractérisé par le fait que** le dispositif de palpeur de mesure (34) peut être engagé dans et à nouveau retiré d'un espace interdentaire transversalement à la direction d'avance (14).

14. Dispositif (2) selon l'une quelconque des revendications 9 à 13, **caractérisé par le fait que** le dispositif de palpeur de mesure (34) peut être dévié dans la direction d'avance (14) lorsque l'opération de mesure est effectuée.

15. Dispositif (2) selon l'une ou plusieurs des revendications précédentes, **caractérisé par le fait qu'**un dispositif destiné à surveiller et à détecter l'opération de soudage est prévu.

16. Dispositif (2) selon la revendication 15, **caractérisé par le fait que**, lorsque les deuxièmes mâchoires de préhension (54a, 54b) du deuxième ensemble de préhension (52) sont retirées, une détection directe optique et/ou thermique découverte est permise par le dispositif destiné à surveiller et à détecter l'opération de soudage.

17. Dispositif (2) selon l'une ou plusieurs des revendications précédentes, **caractérisé par le fait que** l'électrode de soudage (26) est conçue pour maintenir de façon magnétique le corps en matériau dur qui lui a été remis.

18. Procédé de soudage de corps en matériau dur (4) sur des dents (6) d'une lame de scie (8) en utilisant un dispositif (2) selon l'une ou plusieurs des revendications 1 à 16, **caractérisé par le fait que** le procédé comprend les étapes suivantes consistant à:
- avancer la lame de scie (8) dans une direction d'avance (14) au moyen du dispositif d'avance de lame de scie (12);
- amener une dent (6a) respective visée de la lame de scie (8) dans une position cible (16) à l'intérieur d'une zone de travail (10) du dispositif (2);
- centrer la lame de scie (8) au moyen du premier dispositif de centrage (30) transversalement à la direction d'avance (14);
- fixer la lame de scie au moyen du premier dispositif de centrage (30);
- amener un corps en matériau dur (4) respectif et remettre celui-ci à une électrode de soudage (26) au moyen du dispositif d'amenée (28),
- avancer, dans la zone de travail (10), l'électrode de soudage (26) conjointement avec le corps en matériau dur qui lui a été remis;
- centrer le corps en matériau dur (4) respectif amené dans la zone de travail, au moyen du deuxième dispositif de centrage (32) transversalement à la direction d'avance (14) avant le soudage,
- souder le corps en matériau dur (4) à la dent (6a) située en position cible (16) dans la zone de travail;
- reculer l'électrode de soudage (26) de la zone de travail (10);
**caractérisé par le fait**
**que** le centrage de la lame de scie (8) par le premier dispositif de centrage (30) donne une position de centrage pour le centrage du corps en matériau dur (4) par le deuxième dispositif de centrage (32) de sorte que, lors du centrage du corps en matériau dur (4) respectif transversalement à la direction d'avance (14), on parvient à un centrage du corps en matériau dur (4) par rapport à la lame de scie (8) préalablement centrée et fixée.
